# EUROPEAN PATENT APPLICATION

(11) **EP 4 336 613 A1**
(43) Date of publication of application: **13.03.2024**
(21) Application number: 23192688.2
(22) Date of filing: 22.08.2023
(51) Int. Cl.: H01M 10/04, H01M 50/103, H01M 50/172, H01M 50/176, H01M 50/528, H01M 50/536, H01M 50/553, H01M 50/557, H01M 50/564, H01M 50/566, H01M 50/567, H01M 50/55

(54) **BATTERY AND MANUFACTURING METHOD OF BATTERY**

(30) Priority: 07.09.2022 JP 2022142223
(71) Applicant: Prime Planet Energy & Solutions, Inc., Chuo-ku Tokyo 103-0022 (JP)
(72) Inventor: YAMAMOTO, Shota, Tokyo, 103-0022 (JP)
(74) Representative: Kuhnen & Wacker Patent- und Rechtsanwaltsbüro PartG mbB

(57) **Abstract**

Provided is a technique that enhances a reliability of a connecting part with a terminal and another conductive member. According to the herein disclosed technique, a battery (100) comprises a terminal (40) which comprises a first conductive member (41) and with a second conductive member (42) electrically connected to the first conductive member (42), and a third conductive member (14) connected to the terminal (40). The second conductive member (42) includes a crimp part (42c) at one of end parts, and a positioning part (42p) at an outer surface (42u) of the other one of end parts. The crimp part (42c) is crimped to the third conductive member (14). The first conductive member (41) has a through-hole (41h). When viewed along a central axis (C) direction of the through-hole (41h), the positioning part (42p) is provided to overlap with the through-hole (41h).

## Description

### BACKGROUND OF THE DISCLOSURE

### 1. Technical Field

The present disclosure relates to a battery, and a manufacturing method of a battery.

### 2. Background

Recently, a secondary battery, such as lithium ion secondary battery and nickel hydrogen battery, is suitably used as a portable power supply for a personal computer, a portable terminal, or the like, and as a power supply for driving mounted on a vehicle, such as hybrid vehicle (HEV), plug-in hybrid vehicle (PHEV), and battery electric vehicle (BEV).

Regarding this, the secondary battery includes, for example, a terminal that is connected to an electrode of an electrode body as a power generating element. The terminal might be, for example, formed by assembling 2 or more members.

For example, Japanese Patent Application Publication No. 2022-49729 discloses a secondary battery including a terminal that is provided with a first conductive member formed in a plate shape and with a second conductive member electrically including a flange part connected to the first conductive member. As for the terminal described above, it is proposed to use a terminal that includes a fastening part, which is configured to mechanically fix the first conductive member and the flange part of the second conductive member, and that includes a metal joining part, which is configured to perform metal joining on the first conductive member and the flange part of the second conductive member at a position away from the fastening part. This patent application publication describes that, by including the fastening part and the metal joining part whose coupling methods are different from each other, it becomes difficult to cause deformation even if a vibration, an impact, or the like, is added from the outside, and thus describes that a conduction reliability with the first conductive member and the second conductive member can be enhanced.

### SUMMARY OF THE INVENTION

Anyway, another conductive member (positive electrode lead member and negative electrode lead member in Japanese Patent Application Publication No. 2022-49729) might intervene the connection with the terminal and the electrode body. The present inventor has thought to want further enhancing a reliability of the connecting part with the terminal and said another conductive member.

The present disclosure has been made in view of the above-described circumstances, and has an object to provide a technique of enhancing a reliability for the connecting part with the terminal and said another conductive member.

According to the herein disclosed technique, a battery is provided that includes a terminal, provided with a first conductive member and a second conductive member electrically connected to the first conductive member, and that includes a third conductive member connected to the terminal. The second conductive member includes a crimp part at one of end parts, and includes a positioning part on an outer surface of the other one of the end parts. The crimp part is crimped to the third conductive member. The first conductive member includes a through-hole. The positioning part is provided to overlap with the through-hole when viewed along a central axis direction of the through-hole.

Regarding the battery including the configuration described above, by making the second conductive member include the positioning part, it is possible to hold the crimp part at a desired position. The crimp part can be crimped to the third conductive member in this state, and thus it is possible to suppress an undesired deformation from being caused on the crimp part. Therefore, it is possible to enhance a reliability of the connecting part with the terminal and another conductive member.

In addition, according to the herein disclosed technique, a manufacturing method of a battery is provided, and the battery includes a terminal, provided with a first conductive member and a second conductive member electrically connected to the first conductive member, and includes a third conductive member connected to the terminal. The second conductive member includes a crimp part at one of end parts, and includes a positioning part on an outer surface of the other one of the end parts. The manufacturing method includes inserting the crimp part into a through-hole provided at the third conductive member, and crimping the crimp part with respect to the third conductive member under a state of making the positioning part abut on the positioning jig after the inserting.

Regarding the manufacturing method including the configuration described above, the crimp part is crimped to the third conductive member under a state where the positioning part is arranged to abut on the positioning jig. By making the positioning part abut on the positioning jig, it becomes easy, to a pressing member configured to press the crimp part, to decide the position of the crimp part. Thus, it is possible to suppress the undesired deformation caused on the crimp part, and therefore, it is possible to enhance the reliability of the connecting part with the terminal and another conductive member.

### BRIEF DESCRIPTION OF THE DRAWINGS

FIG. 1 is a perspective view of a battery 100.
FIG. 2 is a II-II cross section view of FIG. 1.
FIG. 3 is a portion enlarged cross section view at a vicinity of a negative electrode terminal 40.
FIG. 4 is a plan view of the negative electrode terminal 40.
FIG. 5 is a V-V cross section view of FIG. 4.
FIG. 6 is a cross section view at the vicinity of the negative electrode terminal 40 at an attaching step.

### DETAILED DESCRIPTION OF THE PREFERRED EMBODIMENTS

Below, one embodiment of a herein disclosed battery will be explained. The embodiment explained herein is, of course, not intended to restrict particularly the herein disclosed technique. The herein disclosed technique is not restricted to the herein explained embodiment, unless specifically mentioned. Each figure is schematically drawn, and does not always reflect a real thing. In addition, members/portions having the same effect are suitably provided with the same reference sign, and overlapped explanation is omitted. In addition, the wording "A to B" representing a numerical value range means "equal to or more than A and not more than B" unless specifically mentioned, and further semantically covers "more than A and less than B".

In the present specification, the term "secondary battery" means an electric storage device in general that generates a charge and discharge response by charge carriers moving between a pair of electrodes (positive electrode and negative electrode) via an electrolyte. The secondary battery described above semantically covers a storage battery, such as lithium ion secondary battery, nickel hydrogen battery, and nickel cadmium battery, and further semantically covers a capacitor, such as electric double layer capacitor. Below, an embodiment in a case where the lithium ion secondary battery is a target will be described as one example of the above described secondary battery. Incidentally, in the below described explanation, the secondary battery might be referred to as simply "battery", too.

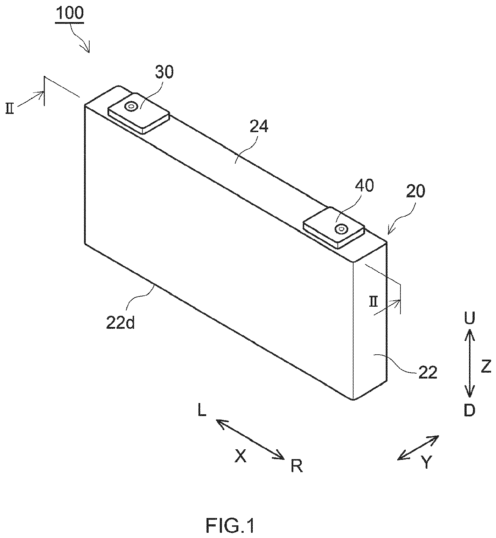

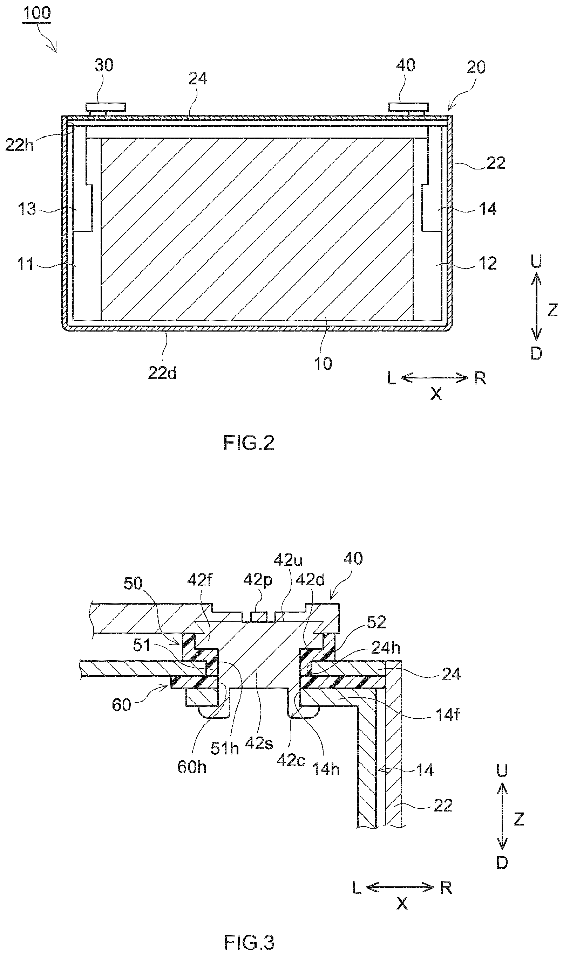

FIG. 1 is a perspective view of a battery 100. FIG. 2 is a II-II cross section view of FIG. 1. Incidentally, in the below described explanation, the reference signs L, R, U, and D in figures respectively represent left, right, up, and down. Additionally, in figures, a reference sign X shows a long side direction of a wide width surface of the battery 100, a reference sign Y shows a short side direction of the wide width surface of the battery 100, and a reference sign Z shows a vertical direction of the battery 100. However, these are merely directions for convenience sake of explanation, which never restrict the disposed form of the battery 100.

As shown in FIG. 2, the battery 100 includes an electrode body 10, a battery case 20, a positive electrode terminal 30, and a negative electrode terminal 40. The battery 100 here is a lithium ion secondary battery. As the illustration is omitted, the battery 100 here includes an electrolyte. The battery 100 is configured by accommodating the electrode body 10 and the not-shown electrolyte in the battery case 20.

The electrode body 10 might be similar to the conventional one, and is not particularly restricted. The electrode body 10 includes a positive electrode and a negative electrode which are not shown in figures. The electrode body 10 is, for example, a flat wound electrode body configured by laminating the positive electrode in a strip-like shape and the negative electrode in a strip-like shape, with a separator in a strip-like shape interposed therebetween, in an insulated state, and then by wounding the resultant with a winding axis as the center. However, the electrode body 10 might be a laminate electrode body configured by stacking a positive electrode formed in a square shape (for example, rectangular shape) and a negative electrode formed in a square shape (for example, rectangular shape), in the insulated state. The positive electrode includes a positive electrode current collector 11 and a not-shown positive electrode mixture layer which is fixed on the positive electrode current collector 11. The positive electrode current collector 11 is, for example, configured with an electrically conductive metal, such as aluminum, aluminum alloy, nickel, and stainless steel. The positive electrode mixture layer contains a positive electrode active material (for example, lithium transition metal composite oxide). The negative electrode includes a negative electrode current collector 12 and a not-shown negative electrode mixture layer which is fixed on the negative electrode current collector 12. The negative electrode current collector is, for example, configured with an electrically conductive metal, such as copper, copper alloy, nickel, and stainless steel. The negative electrode mixture layer contains a negative electrode active material (for example, a carbon material, such as graphite).

As shown in FIG. 2, at a center portion of the electrode body 10 in a long side direction X, a laminate portion is formed in which the positive electrode mixture layer and the negative electrode mixture layer are laminated in the insulated state. On the other hand, at a left end part of the electrode body 10 in the long side direction X, a portion of the positive electrode current collector 11 on which the positive electrode mixture layer is not formed (positive electrode current collector exposed part) is configured to project from the laminate portion. On the positive electrode current collector exposed part, a positive electrode lead member 13 is attached. The positive electrode lead member 13 might be, for example, configured with the electrically conductive metal, such as aluminum, aluminum alloy, nickel, and stainless steel, which is the metal material the same as the positive electrode current collector 11. In addition, at a right end part of the electrode body 10 in the long side direction X, a portion of the negative electrode current collector 12 on which the negative electrode mixture layer is not formed (negative electrode current collector exposed part) is configured to project from the laminate portion. On the negative electrode current collector exposed part, a negative electrode lead member 14 is attached. A material (metal species) of the negative electrode lead member 14 might be different from the positive electrode lead member 13. The negative electrode lead member 14 might be, for example, configured with the electrically conductive metal, such as copper, copper alloy, nickel, and stainless steel, which is the metal species the same as the negative electrode current collector 12.

The electrolyte might be similar to conventional one, and is not particularly restricted. The electrolyte is, for example, a nonaqueous type liquid electrolyte (nonaqueous electrolytic solution) containing a nonaqueous type solvent and a supporting salt. The nonaqueous type solvent contains, for example, carbonates, such as ethylene carbonate, dimethyl carbonate, and ethyl methyl carbonate. The supporting salt is, for example, a fluorine-containing lithium salt, such as LiPF₆. However, the electrolyte might be in a solid state (solid electrolyte) and might be integrated with the electrode body 10.

The battery case 20 is a housing configured to accommodate the electrode body 10. The battery case 20 here is formed in a flat and bottomed rectangular parallelepiped shape (square shape). However, a shape of the battery case 20 is not restricted to the square shape, and might be an arbitrary shape, such as circular column. A material of the battery case 20 might be the same as a material conventionally used, and is not particularly restricted. The battery case 20 is, for example, configured with a metal material being lightweight and having a good thermal conductivity, such as aluminum, aluminum alloy, and stainless steel. As shown in FIG. 2, the battery case 20 includes a body 22 having an opening part 22h, and includes a lid (sealing plate) 24 configured to close the opening part 22h. The battery case 20 is integrated by joining (for example, welding and joining) the lid 24 to a peripheral edge of the opening part 22h of the body 22. The battery case 20 is airtightly sealed (hermetically sealed).

The body 22 has a bottom surface 22d formed in a flat plate shape. The lid 24 is opposed to the bottom surface 22d of the body 22. The lid 24 is attached to the body 22 to close the opening part 22h of the body 22. The lid 24 here is formed in an approximately rectangular shape. Incidentally, in the present specification, "approximately rectangular shape" is a term semantically covering not only a perfect rectangular shape (oblong shape), but also, for example, a shape whose corner part connecting the long side and the short side of the rectangular shape is formed in a R-like shape, a shape having a notch at the corner part, or the like.

As shown in FIG. 1, the positive electrode terminal 30 and the negative electrode terminal 40 are configured to protrude to the outside of the battery case 20. The positive electrode terminal 30 and the negative electrode terminal 40 here are both configured to protrude from the same surface (here, lid 24) of the battery case 20. However, the positive electrode terminal 30 and the negative electrode terminal 40 might be configured to respectively protrude from different surfaces of the battery case 20. The positive electrode terminal 30 and the negative electrode terminal 40 are respectively arranged at opposite end portions of the lid 24 in the long side direction X.

The positive electrode terminal 30 is electrically connected to the positive electrode of the electrode body 10 via the positive electrode lead member 13 inside the battery case 20. The negative electrode terminal 40 is electrically connected to the negative electrode of the electrode body 10 via the negative electrode lead member 14 inside the battery case 20. The positive electrode terminal 30 and the negative electrode terminal 40 both are attached to the lid 24. Each of the positive electrode terminal 30 and the negative electrode terminal 40 is insulated from the lid 24 by a gasket 50 (see FIG. 3) and an insulator 60 (see FIG. 3).

FIG. 3 is a portion enlarged cross section view at a vicinity of the negative electrode terminal 40. Below, although a terminal structure at the negative electrode terminal 40 side will be explained as an example, a terminal structure at the positive electrode terminal 30 side might be also configured similarly. In that case, on the following descriptions, it is possible for reading to suitably replace a point of "negative electrode" with "positive electrode".

As shown in FIG. 3, a terminal taking out hole 24h penetrating in a vertical direction Z is formed on the lid 24. In a plan view, the terminal taking out hole 24h is, for example, formed in a ring shape. The terminal taking out hole 24h has an inner diameter that allows a later-described shaft column part 42s of the negative electrode terminal 40 before the crimping process to be inserted. The terminal taking out hole 24h is formed to be smaller than a later-described flange part 42f of the negative electrode terminal 40.

The negative electrode lead member 14 is attached to the exposed part of the negative electrode current collector 12, and configures a conduction path electrically connecting the negative electrode and the negative electrode terminal 40. The negative electrode lead member 14 has a flat plate-shaped portion 14f that horizontally extends along an inner side surface of the lid 24. On the flat plate-shaped portion 14f, a through-hole 14h is formed at a position corresponding to the terminal taking out hole 24h. The through-hole 14h has an inner diameter that allows the later-described shaft column part 42s of the negative electrode terminal 40 before the crimping process to be inserted. The negative electrode lead member 14 is fixed by the crimping process to the lid 24, which is insulated state by the insulator 60. Incidentally, the negative electrode lead member 14 is an example of "third conductive member" of the herein disclosed battery. In the below described explanation, "negative electrode lead member 14" might be referred to as "third conductive member 14".

The gasket 50 is an insulating member arranged between an upper surface (outer side surface) of the lid 24 and the negative electrode terminal 40. The gasket 50 here has a function of establishing an insulation between the lid 24 and the negative electrode terminal 40 and of closing the terminal taking out hole 24h. The gasket 50 is configured with a resin material having an electrically insulating property and being elastically deformable, for example, a fluorinated resin, such as perfluoroalkoxy fluorine resin (PFA); a polyphenylene sulfide resin (PPS); a liphatic polyamide; or the like.

The gasket 50 includes a cylindrical part 51 and a basal part 52. The cylindrical part 51 is a portion configured to inhibit the lid 24 and the shaft column part 42s of the negative electrode terminal 40 from directly coming into contact with each other. The cylindrical part 51 is formed in a hollow cylindrical shape. The cylindrical part 51 includes a through-hole 51h that is configured to penetrate in the vertical direction Z. The through-hole 51h is formed to allow the shaft column part 42s of the negative electrode terminal 40 before the crimping process to be inserted. The cylindrical part 51 is inserted into the terminal taking out hole 24h of the lid 24. The basal part 52 is a portion configured to inhibit the lid 24 and a later-described flange part 42f of the negative electrode terminal 40 from directly coming into contact with each other. The basal part 52 is coupled to a top end of the cylindrical part 51. The basal part 52 is configured to extend from the top end of the cylindrical part 51 in a horizontal direction. The basal part 52 is formed to surround the terminal taking out hole 24h of the lid 24, for example, in a ring shape. The basal part 52 is configured to extend along an upper surface of the lid 24. The basal part 52 is interposed between the lower surface 42d of the flange part 42f of the negative electrode terminal 40 and the upper surface of the lid 24, and compressed in the vertical direction Z by the crimping process.

The insulator 60 is an insulating member arranged between a lower surface (inner side surface) of the lid 24 and the negative electrode lead member 14. The insulator 60 has a function of establishing an insulation between the lid 24 and the negative electrode lead member 14. The insulator 60 includes a flat plate-shaped portion that is configured to horizontally extend along the inner surface of the lid 24. On this flat plate-shaped portion, a through-hole 60h is formed at a position corresponding to the terminal taking out hole 24h. The through-hole 60h has an inner diameter that allows the shaft column part 42s of the negative electrode terminal 40 to be inserted. The insulator 60 is configured with a resin material having a resistant property with respect to the used electrolyte, having an electrically insulating property, and being able to be elastically deformed, for example, a fluorinated resin, such as perfluoroalkoxy fluorine resin (PFA); a polyphenylene sulfide resin (PPS); or the like. The flat plate-shaped portion of the insulator 60 is interposed between the lower surface of the lid 24 and the upper surface of the negative electrode lead member 14, and is compressed in the vertical direction Z by the crimping process.

The negative electrode terminal 40 is configured to be inserted into the terminal taking out hole 24h so as to extend from the inside of the battery case 20 to the outside. As shown in FIG. 3, in the state of being insulated from the lid 24, the negative electrode terminal 40 is crimped at a peripheral edge portion surrounding the terminal taking out hole 24h of the lid 24, by the crimping process. The negative electrode terminal 40 is fixed to the lid 24 by the crimping process, and is electrically connected to the negative electrode lead member 14 (third conductive member 14).

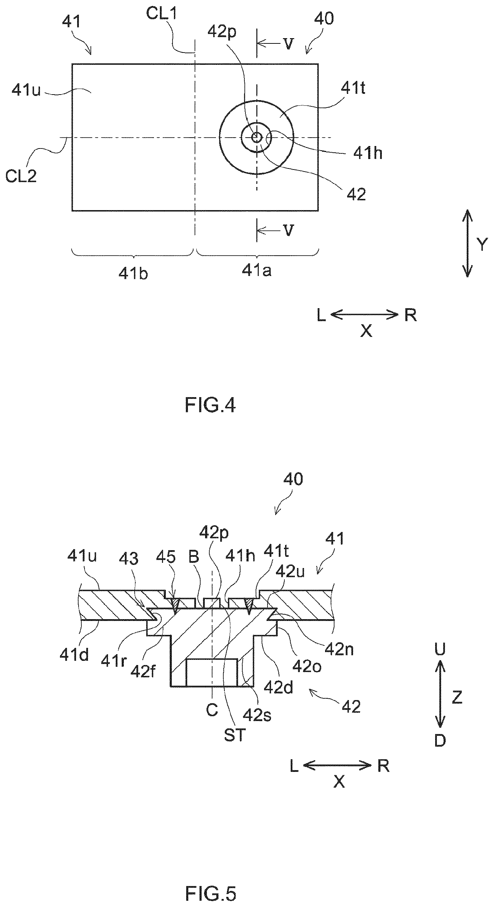

FIG. 4 is a plan view of the negative electrode terminal 40. FIG. 5 is a V-V cross section view of FIG. 4. In FIG. 4 and FIG. 5, a configuration of the negative electrode terminal 40 before being attached to the lid 24 is schematically shown. As shown in FIG. 3 to FIG. 5, the negative electrode terminal 40 includes a first conductive member 41 and a second conductive member 42.

The first conductive member 41 is a member arranged at an outside of the battery case 20. The first conductive member 41 here is made of a metal. The first conductive member 41 is, for example, configured with an electrically conductive metal, such as aluminum, aluminum alloy, nickel, and stainless steel. The first conductive member 41 here is made of aluminum, or made of aluminum alloy. As shown in FIG. 3 to FIG. 5, the first conductive member 41 is formed in a plate shape (for example, flat plate shape). The first conductive member 41 here is formed in an approximately rectangular shape. As shown in FIG. 5, the first conductive member 41 has a lower surface 41d and an upper surface 41u. The lower surface 41d is a surface at a side opposed to the battery case 20 (here, lid 24). The upper surface 41u is a surface at an opposite side to the battery case 20 (here, lid 24), and is a surface at an opposite side of the lower surface 41d. As shown in FIG. 4, the first conductive member 41 includes a connecting part 41a and an extension part 41b. The connecting part 41a and the extension part 41b are portions divided in the long side direction X by a center line CL1.

The connecting part 41a is, for example, a portion electrically connected to the second conductive member 42. As shown in FIG. 4 and FIG. 5, the connecting part 41a includes a thin-walled part 41t, a through-hole 41h, and a recessed part 41r. As shown in FIG. 4, the thin-walled part 41t is provided to have a ring shape in a plan view. The thin-walled part 41t is a portion whose thickness is formed to be smaller than the extension part 41b. The thin-walled part 41t here includes a metal joining part 45. As shown in FIG. 5, the through-hole 41h is a portion penetrating in the vertical direction Z, and is provided to have a ring shape in a plan view (see FIG. 4). On the upper surface 41u of the first conductive member 41, the second conductive member 42 (here, flange part 42f) is exposed from the through-hole 41h. As shown in FIG. 5, the through-hole 41h is provided at the center of the thin-walled part 41t. As shown in FIG. 5, the through-hole 41h is provided at an inner periphery side more than the fastening part 43 and the metal joining part 45. The through-hole 41h can function as an escape path of gas, heat, or the like, which generates at the time of welding. The recessed part 41r is a portion recessed from the lower surface 41d. Although not shown in figures, the recessed part 41r is provided to have a ring shape in a plan view. The recessed part 41r is provided at an outer periphery side more than the metal joining part 45. The recessed part 41r here is formed to have a tapered shape whose diameter is reduced toward the lower surface 41d (in other words, as it approaches the second conductive member 42). Into the recessed part 41r, a later-described narrowed part 42n of the second conductive member 42 is inserted.

The extension part 41b is, for example, a portion extending to one side (left side in FIG. 3 to FIG. 5) in the long side direction X from the connecting part 41a. The extension part 41b is, for example, a portion on which a bus bar is attached when plural batteries 100 are mutually and electrically connected so as to manufacture a battery pack.

The second conductive member 42 is a member extending from the inside of the battery case 20 to the outside. The second electrically conductive member 42 here is made of a metal. The second conductive member 42 is, for example, configured with an electrically conductive metal, such as copper, copper alloy, nickel, and stainless steel. The second conductive member 42 here is made of copper or made of copper alloy. As shown in FIG. 5, the second conductive member 42 includes the flange part 42f and the shaft column part 42s. The flange part 42f and the shaft column part 42s are, for example, portions divided in the vertical direction Z. Here, the second conductive member 42 includes the shaft column part 42s at one of end parts in the vertical direction Z and includes the flange part 42f at the other one of end parts.

The flange part 42f is, for example, a portion electrically connected to the first conductive member 41. As shown in FIG. 5, the flange part 42f has an outer shape being larger than the shaft column part 42s. In addition, the flange part 42f has the outer shape being larger than the terminal taking out hole 24h of the lid 24. The flange part 42f is configured to protrude from the terminal taking out hole 24h of the lid 24 to the outside of the battery case 20. As shown in FIG. 5, the flange part 42f is formed in an approximately circular column shape. Here, a shaft center of the flange part 42f matches a shaft center of the second conductive member 42. In addition, the flange part 42f includes an upper surface 42u, a lower surface 42d, a side surface (outer periphery surface) 42o extending upward from the lower surface 42d, and a narrowed part 42n at which a part of the side surface 42o is narrowed. Here, the upper surface 42u is a top end part of the flange part 42f. The lower surface 42d here is a lower end part of the flange part 42f. Incidentally, the flange part 42f is an example of "the other one of end parts" of the herein disclosed battery. In addition, the upper surface 42u of the flange part 42f is an example of "outer surface of the other one of end parts" of the herein disclosed battery.

As shown in FIG. 5, the narrowed part 42n is provided continuously or intermittently at a part of the side surface 42o of the flange part 42f. Although not shown in figures, the narrowed part 42n has a ring shape in a plan view. By providing the narrowed part 42n in the ring shape, it is possible, for example, to enhance the strength of the fastening part 43. The narrowed part 42n is provided in a symmetrical manner with respect to the shaft center of the flange part 42f. The narrowed part 42n is formed in a tapered shape whose diameter is enlarged toward the upper surface 41u (in other words, as it is away from the shaft column part 42s). The narrowed part 42n is inserted into the recessed part 41r of the first conductive member 41. Here, the narrowed part 42n is fit into the recessed part 41r of the first conductive member 41, and is configured to fit with the recessed part 41r. The narrowed part 42n is an example of "portion accommodated in the recessed part 41r" of the herein disclosed battery.

The shaft column part 42s is, for example, a portion coupled to the lower end part of the flange part 42f. As shown in FIG. 5, the shaft column part 42s is configured to extend downward from the lower end part of the flange part 42f. The shaft column part 42s here includes a crimp part 42c at the lower end part. Here, the shaft center of the shaft column part 42s matches the shaft center of the flange part 42f. Before the crimping process, the crimp part 42c is formed in a hollow shape. The crimp part 42c here is an end part at a side opposite to the flange part 42f. As shown in FIG. 3, the shaft column part 42s is inserted into the terminal taking out hole 24h of the lid 24 when the negative electrode terminal 40 is attached to the lid 24. The crimp part 42c is, for example, expanded by the crimping process when the negative electrode terminal 40 is attached to the lid 24, and is fixed to the third conductive member 14. The shaft column part 42s is electrically connected, by the crimping process, to the third conductive member 14 inside the battery case 20. Incidentally, the shaft column part 42s is an example of "one of end parts" of the herein disclosed battery.

As shown in FIG. 5, the negative electrode terminal 40 includes the fastening part 43. The fastening part 43 is, for example, where the first conductive member 41 and the flange part 42f of the second conductive member 42 couple and are mechanically fixed. The fastening part 43 here is provided at the outer periphery side of the flange part 42f more than the metal joining part 45 in a plan view. The fastening part 43 is formed to have a ring shape in a plan view. The fastening part 43 here is continuously formed. Although not particularly restricted, the fastening part 43 here is provided at the lower surface 41d of the first conductive member 41. For example, the fastening part 43 is configured by fixing (for example, press fixing) the inner wall of the recessed part 41r of the first conductive member 41 to the narrowed part 42n of the second conductive member 42. By providing the fastening part 43, it is possible to make the connection of the first conductive member 41 and the second conductive member 42 be stronger. Thus, it is possible to enhance the conduction reliability of the negative electrode terminal 40.

A forming method of the fastening part 43, which is not particularly restricted if it uses a mechanical join with a mechanical energy, might be, for example, press fitting, shrink fitting, crimping, riveting, folding, bolt joining, or the like. The fastening part 43 is a fit part on which the recessed part 41r of the first conductive member 41 and the narrowed part 42n of the second conductive member 42 are fit. The fastening part 43 might be, for example, a press fit part on which the narrowed part 42n of the second conductive member 42 is fit into the recessed part 41r of the first conductive member 41 by press fitting.

As shown in FIG. 5, the negative electrode terminal 40 includes the metal joining part 45 at a position away from the fastening part 43. The metal joining part 45 is a portion on which the first conductive member 41 and the flange part 42f of the second conductive member 42 are subjected to metal joining. The metal joining part 45 here is provided on the upper surface 41u of the first conductive member 41. The metal joining part 45 is provided at a position away from the through-hole 41h. The metal joining part 45 is provided at the outer periphery side more than the through-hole 41h. The metal joining part 45 might be, for example, a join part whose rigidity is relatively higher, compared with the fastening part 43. By providing the metal joining part 45, it is possible to make the connection of the first conductive member 41 and the second conductive member 42 be stronger. Thus, it is possible to enhance the conduction reliability of the negative electrode terminal 40.

The metal joining part 45 here is provided at the inner periphery side (center side) of the flange part 42f more than the fastening part 43 in a plan view. The metal joining part 45 can be formed with using light energy, electronic energy, heat energy, or the like. Thus, it might be the join part whose strength is relatively low (fragile), compared with the fastening part 43. By arranging the metal joining part 45 at the inner periphery side of the fastening part 43, it is possible to stably maintain the metal joining part 45 so as to enhance the conduction reliability of the negative electrode terminal 40 for a long term. The metal joining part 45 here is provided on the thin-walled part 41t. The metal joining part 45 is continuously or intermittently formed. The metal joining part 45 is formed in an axial symmetry manner with respect to the shaft center of the flange part 42f. The metal joining part 45 here is formed to have a ring shape in a plan view.

The metal joining part 45, which is not particularly restricted, for example, can be formed by fusion welding, pressure fitting, soldering, or the like. From a perspective of enhancing the join strength, it is preferable that the metal joining part 45 is, for example, a welded and joined part formed by laser welding, electron beam welding, ultrasonic welding, resistance welding, TIG (Tungsten Inert Gas) welding, or the like. However, the metal joining part 45 might be formed by a method other than welding, for example, thermocompression bonding, ultrasonic pressure fitting, brazing, or the like.

Anyway, regarding the connection of the negative electrode terminal 40 and the third conductive member 14, for example, at first, the first conductive member 41 to which the second conductive member 42 is attached is held with a jig, and the crimp part 42c is inserted into the terminal taking out hole 24h of the lid 24, the through-hole 51h of the gasket 50, the through-hole 60h of the insulator 60, and the through-hole 14h of the third conductive member 14, in this order. Then, by pressing the crimp part 42c with a pressing member, the negative electrode terminal 40 is crimped to the third conductive member 14. Regarding the crimping operation, for example, the crimp part 42c might be pressed along the center line (see central axis C in FIG. 5) of the through-hole 41h of the first conductive member 41. At that time, if the pressing operation is performed in a state where the center line of the through-hole 41h of the first conductive member 41 and the center line (here, shaft center) of the shaft column part 42s are deviated from each other, an undesired deformation might be caused on the crimp part 42c and crimping process might not be performed properly. If the crimping process is not properly performed, there is concern that the reliability of the connection with the negative electrode terminal 40 and the third conductive member 14 is reduced so as to reduce the reliability of the connection with the negative electrode terminal 40 and the negative electrode of the electrode body 10. Thus, the present inventor has examined about the configuration of the negative electrode terminal 40.

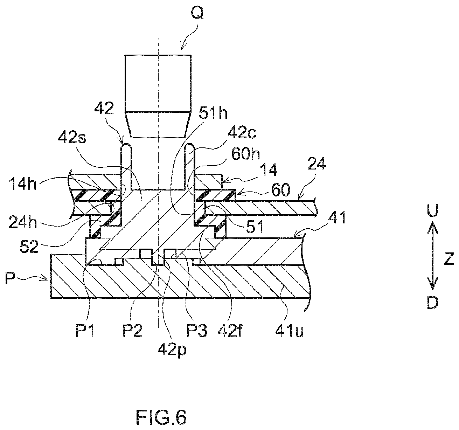

As shown in FIG. 5, the flange part 42f includes a positioning part 42p at an outer surface (here, upper surface 42u) of the top end part. The positioning part 42p is, for example, a portion linked to a positioning jig P holding the third conductive member 14 (see FIG. 6) when the negative electrode terminal 40 is crimped with respect to the third conductive member 14. It is preferable that the positioning part 42p is provided on the shaft center of the shaft column part 42s. It is preferable that the positioning part 42p is provided on the shaft center of the flange part 42f (on the shaft center of the second conductive member).

As viewed along the central axis C direction of the through-hole 41h of the first conductive member 41, the positioning part 42p is, for example, provided to overlap with the through-hole 41h. For example, the positioning part 42p is provided on the central axis C of the through-hole 41h. Here, the shaft center of the positioning part 42p and the central axis C of the through-hole 41h match with each other. The central axis of the through-hole 14h, the shaft center of the flange part 42f, the shaft center of the positioning part 42p, and the shaft column part 42s would be, for example, on the center line CL2 shown in FIG. 4. The center line CL2 is a center line of a short side direction Y of the first conductive member 41.

The positioning part 42p is a protruding part, as shown in FIG. 3 and FIG. 5. Here, the positioning part 42p is configured to protrude from the upper surface 42u toward the outside of the battery case 20. By making the positioning part 42p be formed in a convex shape, it is possible to make a later-described first support part P2 of the positioning jig P (see FIG. 6) be a recessed part. Thus, it is possible to reduce the risk that the first support part P2 is broken. Accordingly, it is possible to more stably manufacture a battery in which the reliability of the connecting part with the negative electrode terminal 40 and the third conductive member 14 is enhanced.

Although not particularly restricting, from a perspective of avoiding the battery height from becoming larger, from a perspective of inhibiting the external load from being added on the positioning part 42p, from a perspective of moldability of the battery pack including the battery 100 for example, attachment easiness of bus bar, or the like, as shown in FIG. 3 and FIG. 5, it is preferable that the positioning part 42p formed in a convex shape is configured not to project from the upper surface 41u of the first conductive member. However, in another embodiment, the positioning part 42p formed in the convex shape might be projected from the upper surface 41u of the first conductive member. When the positioning part 42p is projected from the upper surface 41u of the first conductive member 41, for example, it becomes easy to fit the positioning part 42p into the first support part P2 of the positioning jig P (see FIG. 6).

In addition, although not particularly restricting, from a perspective of suppressing the interference caused by the first conductive member 41, it is preferable that the positioning part 42p and the first conductive member 41 (for example, inner wall of the through-hole 41h) do not come into contact with each other. From the perspective described above, the ratio of the diameter of the positioning part 42p to the inner diameter of the through-hole 41h is, for example, equal to or less than 0.8, preferably equal to or less than 0.7, or further preferably equal to or less than 0.6. On the other hand, if the diameter of the positioning part 42p is too small, for example, it may become difficult to attach the negative electrode terminal 40 to the positioning jig P (see FIG. 6). From the perspective described above, the ratio of the diameter of the positioning part 42p to the inner diameter of the through-hole 41h is, for example, equal to or more than 0.2, preferably equal to or more than 0.3, or further preferably equal to or more than 0.4. However, in another embodiment, the inner diameter of the through-hole 41h and the diameter of the positioning part 42p might be the same. In this case, from a perspective of facilitating the link with the positioning jig P (see FIG. 6), it is preferable that the positioning part 42p formed in the convex shape is configured to project from the upper surface 41u of the first conductive member.

A shape of the positioning part 42p here is a perfect circle in a plan view. By doing this, it is possible to make facilitating attachment of the negative electrode terminal 40 to the positioning jig P (see FIG. 6). On the other hand, from a perspective of enhancing the stability after the negative electrode terminal 40 is attached to the positioning jig P (see FIG. 6), the shape of the positioning part 42p might be, for example, an ellipse; an oblong; a quadrangle; a polygon, such as pentagon, hexagon, heptagon, and octagon; or the like, in a plan view.

In addition, although not particularly restricting, in a case where the negative electrode terminal 40 has been attached to the positioning jig, from a perspective of making the attachment be stably, it is preferable that the positioning part 42p includes a straight part ST (see FIG. 5). The straight part ST is, for example, a portion provided along a direction in which the positioning part 42p extends from a base end B of the positioning part 42p. The straight part ST would be, for example, a flat portion on which a protruding part, a recessed part, and the like, are not provided. The ratio of a length of the straight part ST to a length of the positioning part 42p in a direction where the positioning part 42p extends is, for example, 0.8 to 0.9. In addition, from a perspective of easily attaching the negative electrode terminal 40 to the positioning jig P (see FIG. 6), a C surface or a R surface might be formed at a tip end of the positioning part 42p.

Below, a method for manufacturing the battery 100 will be described. The manufacturing method of the battery 100 here includes: inserting the crimp part 42c into the through-hole 14h provided on the third conductive member 14; and, crimping the crimp part 42c to the third conductive member 14 in a state where the positioning part 42p is made to abut on the positioning jig P (see FIG. 6) after the inserting. The manufacturing method of the battery 100 includes, for example, a preparing step, an attaching step, and a joining step. At the preparing step, for example, the negative electrode terminal 40 is prepared. The preparing step might include, for example, sub-steps of a fastening step and a metal joining step, in this order.

At the fastening step, for example, the first conductive member 41 and the flange part 42f of the second conductive member 42 are mechanically fixed so as to form the fastening part 43. The fastening part 43 can be formed, for example, by inserting the narrowed part 42n of the second conductive member 42 into the recessed part 41r of the first conductive member 41 and then deforming the recessed part 41r of the first conductive member 41 along the outer shape of the narrowed part 42n of the second conductive member 42 so as to fix the inner wall of the recessed part 41r to the second conductive member 42. By doing this, it is possible to enhance the strength of the fastening part 43. The fastening part 43 would be formed by fitting the recessed part 41r of the first conductive member 41 and the narrowed part 42n of the second conductive member 42 to each other. For example, it can be formed by making the narrowed part 42n of the second conductive member 42 be subjected to flat press fitting onto the recessed part 41r of the first conductive member 41. By doing this, it is possible to enhance a workability of the fastening step.

At the metal joining step, for example, metal joining is performed on the thin-walled part 41t of the first conductive member 41 and the flange part 42f of the second conductive member 42, so as to form the metal joining part 45. By performing the metal joining step after the fastening step, it is possible to precisely form the metal joining part 45 whose shape is stable. The metal joining part 45 can be formed, for example, by welding a point on which the thin-walled part 41t of the first conductive member 41 and the flange part 42f of the second conductive member 42 are laminated so as to penetrate the thin-walled part 41t. By welding, it is possible to stably form the metal joining part 45 having a high strength. Incidentally, the gas and heat generated at the time of welding can be released and diffused from the through-hole 41h. By the through-hole 41h, it is possible to suppress the gas, the heat, or the like, from being retained between the thin-walled part 41t and the flange part 42f.

For example, it is preferable that the metal joining part 45 is formed at the center side of the flange part 42f more than the fastening part 43 in a plan view. By doing this, the join point becomes difficult to be deviated, and thus it is possible to enhance the workability of the metal joining step. Additionally, in a case where the metal joining part 45 is formed by welding, it is possible to inhibit the welding point from wobbling so as to enhance the welding property. Further, in a case where the thin-walled part 41t is welded, it is possible to reduce the used energy, so as to enhance the welding property.

At the attaching step, for example, the positive electrode terminal 30, the positive electrode lead member 13, the negative electrode terminal 40, and the negative electrode lead member 14 (third conductive member 14) are attached to the lid 24. The negative electrode terminal 40 and the third conductive member 14 are, for example, fixed by a crimping process (riveting) to the lid 24. For example, the crimp part 42c is inserted into the terminal taking out hole 24h of the lid 24, the through-hole 51h of the gasket 50, the through-hole 60h of the insulator 60, and the through-hole 14h of the third conductive member 14 in this order, and is made to protrude to the outside of the through-hole 14h. Then, onto the crimp part 42c protruding from the through-hole 14h, a compression force is added in the vertical direction Z.

FIG. 6 is a cross section view of the negative electrode terminal 40 vicinity at the attaching step. FIG. 6 shows a cross section view before the crimp part 42c is crimped to the third conductive member 14. As shown in FIG. 6, regarding the negative electrode terminal 40 in a state where the crimp part 42c is inserted into each through-hole of each member, the first conductive member 41 is arranged on the positioning jig P. As the positioning jig P, for example, a jig might be used that includes a recessed part P1, a first support part P2, and a second support part P3. It is preferable for the positioning jig P to be configured with a material (for example, metal material) having, for example, superior strength, hardness, abrasion resistance, corrosion resistance, or the like. As the material described above, it can be illustrated to use SUS440C, SKD11, or the like.

The recessed part P1 is, for example, a portion which is configured to accommodate the first conductive member 41 at the crimping process. As shown in FIG. 6, the first conductive member 41 would be arranged to make the upper surface 41u abut on the bottom surface of the recessed part P1. Although not particularly restricting, from a perspective of enhancing the stability, it is preferable that the side surface of the first conductive member 41 and the inner wall surface of the recessed part P1 abut on each other. The first support part P2 is a portion, for example, configured to support the positioning part 42p of the second conductive member 42. Here, the first support part P2 is formed in a recessed shape. The first support part P2 here is formed in the shape recessed from the second support part P3. For example, by accommodating the protruding tip end of the positioning part 42p having a convex shape into the first support part P2, the positioning part 42p is stably held by the positioning jig P. The second support part P3 is, for example, a portion configured to support the first conductive member 41. As shown in FIG. 6, the second support part P3 is formed in a convex shape. The second support part P3 here is configured to protrude from the bottom surface of the recessed part P1. For example, by abutting the upper surface of the second support part P3 on the thin-walled part 41t (see FIG. 4), the first conductive member 41 can be stably held on the positioning jig P.

As shown in FIG. 6, by making a pressing member Q press, from above, the crimp part 42c of the negative electrode terminal 40 arranged on the positioning jig P, it is possible to perform crimping to the third conductive member 14. As described above, here, the crimp part 42c is inserted into the through-hole 14h provided on the third conductive member 14, and then, after the insertion, the crimp part 42c is crimped to the third conductive member 14 under a state of making the positioning part 42p abut on the positioning jig P. By making the positioning part 42p abut on the positioning jig P, it becomes easy to decide the position of the crimp part 42c with respect to the pressing member Q. Thus, by performing the crimping process, it is possible to suppress an undesired deformation caused on the crimp part 42c. By doing this, it is possible to enhance the reliability of the connecting part with the negative electrode terminal 40 and the third conductive member 14.

Here, as described above, when viewed along the central axis C direction of the through-hole 41h of the first conductive member 41, the positioning part 42p is provided to overlap with the through-hole 41h (see FIG. 5). By doing this, when the pressing member Q is made to abut on the crimp part 42c, it can become easy to abut the pressing member Q on a desired position. Thus, it is possible to further enhance the reliability of the connecting part with the negative electrode terminal 40 and the third conductive member 14. In addition, by providing the positioning part 42p to overlap with the through-hole 41h, it is possible to make the positioning jig P stably hold the negative electrode terminal 40.

By performing the crimping process as described above, the basal part 52 of the gasket 50 and the flat plate-shaped portion of the insulator 60 are compressed, so as to make the gasket 50, the lid 24, the insulator 60, and the third conductive member 14 (negative electrode lead member 14) be integrally fixed on the lid 24, and so as to make the terminal taking out hole 24h be sealed. The attaching method of the positive electrode terminal 30 and the positive electrode lead member 13 might be similar to the above-described attaching method of the negative electrode terminal 40 and the negative electrode lead member 14. The negative electrode lead member 14 is welded on the exposed part of the negative electrode current collector 12, so as to electrically connect the negative electrode of the electrode body 10 and the negative electrode terminal 40. The positive electrode lead member 13 is welded on the exposed part of the positive electrode current collector 11, as to electrically connect the positive electrode of the electrode body 10 and the positive electrode terminal 30. By doing this, the lid 24, the positive electrode terminal 30, the negative electrode terminal 40, and the electrode body 10 are integrated.

At the joining step, the electrode body 10 being integrated with the lid 24 is accommodated in an internal space of the body 22, and then the body 22 and the lid 24 are sealed. It is possible to perform sealing, for example, by welding, such as laser welding. After that, the nonaqueous electrolytic solution is injected from a liquid injection port not shown in figures, and then the liquid injection port is closed, so as to hermetically seal the battery 100. As described above, it is possible to manufacture the battery 100.

Although the battery 100 can be used for various purposes, it is possible to suitably use the battery for a purpose in which an external force, such as vibration and impact, can be added at the use time, for example, as a power source for motor (power supply for driving) capable of being mounted on various vehicles, such as passenger car and truck. The kind of the vehicle is not particularly restricted, but it is possible to use it, for example, on a plug-in hybrid electric vehicle (PHEV), a hybrid electric vehicle (HEV), a battery electric vehicle (BEV), or the like.

Above, an embodiment of the herein disclosed technique has been explained, but the explanation is not intended to restrict the herein disclosed technique to the above-described embodiment. The herein disclosed technique can be applied in another embodiment. The technique recited in the appended claims includes variously deformed or changed versions of the embodiments that have been illustrated above. For example, one part of the above described embodiment can be replaced with another deformed aspect, and furthermore another deformed aspect can be added to the above described embodiment. In addition, unless the technical feature is explained to be essential, this technical feature can be appropriately deleted.

For example, in the above embodiment, the positioning part 42p has been a protruding part. However, the herein disclosed technique is not restricted to this illustration. The positioning part might be, for example, a recessed part. By making the positioning part be formed in a recessed shape, it is possible, for example, to avoid making the battery become too high. In addition, when the battery pack is configured, it is possible to further facilitate the attachment of the bus bar. In addition, it is possible to suppress the deformation from being caused on the positioning part. Incidentally, the inner diameter of the positioning part being the recessed part might be the same as the inner diameter of the through-hole 41h, or might be smaller than the inner diameter of the through-hole 41h. Additionally, in a case where the positioning part is formed in a recessed shape, the first support part P2 of the positioning jig P would be formed in a convex shape.

As described above, regarding particular aspects of the herein disclosed technique, contents of respective below-described items can be illustrated.

Item 1: A battery (100), comprising:
a terminal (40) which comprises a first conductive member (41), and a second conductive member (42) electrically connected to the first conductive member (41); and
a third conductive member (14) that is connected to the terminal (40),
wherein
the second conductive member (42) comprises a crimp part (42c) at one of end parts, and comprises a positioning part (42p) on an outer surface (42u) of the other one of the end parts,
the crimp part (42c) is crimped to the third conductive member (14),
the first conductive member (41) has a through-hole (41h), and
the positioning part (42p) is provided to overlap with the through-hole (41h) when viewed along a central axis (C) direction of the through-hole (41h).

Item 2: The battery (100) recited in item 1, wherein
the first conductive member (41) is in a plate shape,
the second conductive member (42) comprises a flange part (42f), and
the terminal (40) comprises a fastening part (43) on which the first conductive member (41) and the flange part (42f) of the second conductive member (42) are mechanically fixed.

Item 3: The battery (100) recited in claim 2, wherein
the terminal (40) comprises a metal joining part (45) in which the first conductive member (41) and the flange part (42f) of the second conductive member (42) are subjected to metal joining, and the metal joining part (45) is arranged at a position away from the fastening part (43).

Item 4: The battery (100) recited in Item 2 or 3, wherein
the first conductive member (41) comprises a recessed part (41r) which accommodates at least a part of the flange part (42f) of the second conductive member (42), and
on the fastening part (43), an inner wall of the recessed part (41r) is fixed by a portion accommodated in the recessed part (41r) among the second conductive member (42).

Item 5: The battery (100) recited in any one of Items 1 to 4, wherein
the positioning part (42p) is a protruding part.

Item 6: A manufacturing method of a battery (100) comprising a terminal (40) which comprises a first conductive member (41) and a second conductive member (42) electrically connected to the first conductive member (41), and comprising a third conductive member (14) that is connected to the terminal (40),
wherein
the second conductive member (42) comprises a crimp part (42c) at one of end parts, and comprises a positioning part (42p) on an outer surface (42u) of the other one of the end parts, and
the manufacturing method comprises:
   inserting the crimp part (42c) into a through-hole (14h) provided at the third conductive member (14); and
   crimping the crimp part (42c) to the third conductive member (14) under a state of making the positioning part (42p) abut on the positioning jig (P) after the inserting.

Item 7: The manufacturing method recited in Item 6, wherein
the first conductive member (41) has a through-hole (41h), and
the positioning part (42p) is provided to overlap with the through-hole (41h) when viewed along a central axis (C) direction of the through-hole (41h) of the first conductive member (41).

Item 8: The manufacturing method recited in Item 6 or 7, wherein
the first conductive member (41) is in a plate shape,
the second conductive member (42) comprises a flange part (42f), and
the manufacturing method comprises mechanically fixing the first conductive member (41) and the flange part (42f) of the second conductive member (42), so as to form a fastening part (43).

Item 9: The manufacturing method recited in Item 8, further comprising:
joining the first conductive member (41) and the flange part (42f) so as to form a metal joining part (45) at a position away from the fastening part (43).

Item 10: The manufacturing method recited in Item 8 or 9, wherein
the first conductive member (41) comprises a recessed part (41r) which accommodates at least a part of the flange part (42f) of the second conductive member (42), and
the fastening part (43) is formed by inserting the part of the second conductive member (42) into the recessed part (41r), and by fixing an inner wall of the recessed part (41r) by a portion of the second conductive member (42) accommodated in the recessed part (41r).

Item 11: The manufacturing method recited in Item 9 or 10, wherein
the metal joining part (45) is formed at a center side of the flange part (42f) more than the fastening part (43) in a plan view.

Item 12: The manufacturing method recited in any one of Items 6 to 11, wherein
the positioning part (42p) is a protruding part.

## Claims

1. A battery (100), comprising:
a terminal (40) which comprises a first conductive member (41), and a second conductive member (42) electrically connected to the first conductive member (41); and
a third conductive member (14) that is connected to the terminal (40),
wherein
the second conductive member (42) comprises a crimp part (42c) at one of end parts, and comprises a positioning part (42p) on an outer surface (42u) of the other one of the end parts,
the crimp part (42c) is crimped to the third conductive member (14),
the first conductive member (41) has a through-hole (41h), and
the positioning part (42p) is provided to overlap with the through-hole (41h) when viewed along a central axis (C) direction of the through-hole (41h).

2. The battery (100) according to claim 1, wherein
the first conductive member (41) is in a plate shape,
the second conductive member (42) comprises a flange part (42f), and
the terminal (40) comprises a fastening part (43) on which the first conductive member (41) and the flange part (42f) of the second conductive member (42) are mechanically fixed.

3. The battery (100) according to claim 2, wherein
the terminal (40) comprises a metal joining part (45) in which the first conductive member (41) and the flange part (42f) of the second conductive member (42) are subjected to metal joining, and the metal joining part (45) is arranged at a position away from the fastening part (43).

4. The battery (100) according to claim 2 or 3, wherein
the first conductive member (41) comprises a recessed part (41r) which accommodates at least a part of the flange part (42f) of the second conductive member (42), and
on the fastening part (43), an inner wall of the recessed part (41r) is fixed by a portion accommodated in the recessed part (41r) among the second conductive member (42).

5. The battery (100) according to any one of claims 1-3, wherein
the positioning part (42p) is a protruding part.

6. A manufacturing method of a battery (100) comprising a terminal (40) which comprises a first conductive member (41) and a second conductive member (42) electrically connected to the first conductive member (41), and comprising a third conductive member (14) that is connected to the terminal (40),
wherein
the second conductive member (42) comprises a crimp part (42c) at one of end parts, and comprises a positioning part (42p) on an outer surface (42u) of the other one of the end parts, and
the manufacturing method comprises:
inserting the crimp part (42c) into a through-hole (14h) provided at the third conductive member (14); and
crimping the crimp part (42c) to the third conductive member (14) under a state of making the positioning part (42p) abut on the positioning jig (P) after the inserting.

7. The manufacturing method according to claim 6, wherein
the first conductive member (41) has a through-hole (41h), and
the positioning part (42p) is provided to overlap with the through-hole (41h) when viewed along a central axis (C) direction of the through-hole (41h) of the first conductive member (41).

8. The manufacturing method according to claim 6 or 7, wherein
the first conductive member (41) is in a plate shape,
the second conductive member (42) comprises a flange part (42f), and
the manufacturing method comprises mechanically fixing the first conductive member (41) and the flange part (42f) of the second conductive member (42), so as to form a fastening part (43).

9. The manufacturing method according to claim 8, further comprising:
joining the first conductive member (41) and the flange part (42f) so as to form a metal joining part (45) at a position away from the fastening part (43).

10. The manufacturing method according to claim 8, wherein
the first conductive member (41) comprises a recessed part (41r) which accommodates at least a part of the flange part (42f) of the second conductive member (42), and
the fastening part (43) is formed by inserting the part of the second conductive member (42) into the recessed part (41r), and by fixing an inner wall of the recessed part (41r) by a portion of the second conductive member (42) accommodated in the recessed part (41r).

11. The manufacturing method according to claim 9, wherein
the metal joining part (45) is formed at a center side of the flange part (42f) more than the fastening part (43) in a plan view.

12. The manufacturing method according to claim 6 or 7, wherein
the positioning part (42p) is a protruding part.
